# EUROPEAN PATENT APPLICATION

(11) **EP 4 745 109 A1**
(43) Date of publication of application: **20.05.2026**
(21) Application number: 24383245.8
(22) Date of filing: 15.11.2024
(51) Int. Cl.: C04B 33/13, C04B 33/132, C04B 33/135, C04B 33/138, C04B 33/32, C04B 35/626, C04B 33/30

(54) **METHOD FOR PRODUCING A CERAMIC PRODUCT**

(71) Applicant: BARRO TECHNOLOGIES, SL, 25110 Alpicat (Lleida) (ES)
(72) Inventor: FERNÁNDEZ SÁNCHEZ, Marc, 08700 Igualada (ES); FERNÁNDEZ SÁNCHEZ, Enric, 08710 Santa Margarida de Montbui (ES)
(74) Representative: Torner, Juncosa I Associats, SL

(57) **Abstract**

The present disclosure is related to a method for producing a ceramic product comprising the steps of mixing clay with an alkaline earth hydroxide to obtain a first mixture, milling the first mixture, adding a water dissolution of an alkaline carbonate to the mixture to obtain a second mixture, extruding the second mixture in a vacuum extruder to obtain an air-free extruded product, drying the air-free extruded product to obtain a dried product until the residual moisture is between 4% and 6% by weight with respect to the total amount of the obtained dried product, and firing the dried product at a temperature between 400 °C and 500 °C. The present disclosure also relates to the ceramic product obtained by the method herein disclosed. The present disclosure also relates to a method to assay the stability of the ceramic product as disclosed herein.

## Description

### TECHNICAL FIELD

The present disclosure relates to a method for producing a ceramic product and to the ceramic product obtained thereof. Moreover, the present disclosure relates to a method to assay the stability of the ceramic product obtained thereof.

### BACKGROUND ART

The first fired bricks, ceramic products for buildings, were made in Mesopotamia in 3000 BC, although the art of firing bricks had been known for many centuries before that.

In ancient Rome, good quality fired tiles were already being made in 600 BC.

For about 20 centuries, the technology to obtain those building materials was the one implemented by the Romans, until the industrial revolution arrived in the middle of the 19^{th} century and during the 20^{th} century and this process was mechanized and automated, reducing the number of facilities and multiplying its production capacity.

During the 20^{th} century, the main improvements in the production process of ceramic products for buildings were implemented, being extrusion or mechanized moulding one of the first and most important ones, followed by vacuum, improvement in the design of ovens and dryers, in the preparation machinery, etc.

The firing temperature of bricks used in construction usually ranges from 850 °C to 1050 °C, with a temperature of 950 °C being considered normal.

The following documents exemplify the current state of the art in this sector:
US4758538A discloses, for instance, a process for producing a foamed ceramic body, which comprises mixing 100 parts by weight of a powdery mixture composed of 75 to 90% by weight of a volcanic material containing at least 65% by weight of SiO₂, 5 to 15% by weight of at least one of Na₂O or K₂O or compound which forms Na₂O or K₂O on heating and 2 to 10% by weight of CaO or a compound which forms CaO on heating, uniformly with 0.1 to 1 part by weight of a blowing agent, and heating the resulting mixture to a temperature of 800 °C to 1100 °C.
EP2985270 discloses a preparation method of low temperature fast-fired lightweight ceramic heat insulation plates, comprising: performing ball milling and powder spraying on raw materials containing foamable ceramic waste to make foamable powders, the weight percentages of the foamable ceramic waste in the raw materials being 80-100 wt%; uniformly mixing 100 weight parts of the foamable powders with 3-15 weight parts of granular powders of organics with low melting points to obtain mixed powder materials; pressing the mixed powder materials under 10-20 MPa to make a ceramic green body; and firing the ceramic green body at 1100-1170 °C to make the lightweight energy-saving ceramic heat insulation plates.

At the beginning of the 21st century and with the growing concerns about the effects of greenhouse gases on the environment, a new requirement was presented to the ceramic industry: the need to drastically reduce CO₂ and hydrogen fluoride (HF) emissions and therefore, the reduction of fossil fuel consumption involved in the ceramic firing process; mainly because with the current process, temperatures above 850 °C must be reached, in many cases 950 °C or even more than 1050 °C.

In recent years it has been recognized that fluoride and its components are highly contaminating emissions from the brick kilns. The toxicity of the components of fluoride is 100 times higher than that of SO₃. Fluorides are particularly susceptible for vegetable and herbivore animals. For instance, in a fumigation test it was proved that by increasing the concentration of HF from 0.5 to 4.3 µg/m³ of air, a reduction in the onion harvest was almost half of its normal production.

With animals, ingestion of rich foods containing fluoride produce the illness fluorosis, characterized by changes in the formation and growth of teeth, malformed skeletons, paralysis, loss of appetite. More than 30 - 50 ppm of fluoride can be dangerous for cattle. These results often are overlooked by large fluoride producers as in the alumina industry.

With respect to plants it should be noted that there are times of the year when they are especially sensitive to the emissions of fluoride such as spring which coincides with the flowering period.

The firing temperatures used in tile, roof tile and brick factories, as mentioned above, range between 850 and 1,050°C for common bricks and between 1,100°C and 1,325°C for KLINKER bricks, glazed tiles, refractory products, etc.

Typically, a ceramic product fired below 700 °C is unstable when exposed to ambient conditions and disintegrates when immersed in water.

Nonetheless, there is a real need in the art to obtain ceramic products suitable for the building and construction industry that are obtained at a lower firing temperature, thereby substantially reducing fuel consumption and the CO₂ and HF emissions into the atmosphere, since fuel consumption increases exponentially with the firing temperature and calcium carbonate decomposes yielding CO₂ as a product at a temperature of ca. 900°C and calcium fluoride decomposes yielding HF as a product at a temperature of ca. 800 °C.

### SUMMARY OF THE DISCLOSURE

In order to address one or more of the foregoing problems, one aspect of the present disclosure relates to a method for producing a ceramic product comprising the steps of mixing clay with an alkaline earth hydroxide to obtain a first mixture, milling the first mixture, adding a water dissolution of an alkaline carbonate to the mixture to obtain a second mixture, extruding the second mixture in a vacuum extruder to obtain an air-free extruded product, drying the air-free kneaded product to obtain a dried product until the residual moisture is between 4% - 6% by weight with respect to the total amount of the obtained dried product, and firing the dried product at a temperature between 400 °C and 500 °C.

A second aspect of the present disclosure relates to the ceramic product obtained by the method herein defined.

A third aspect of the present disclosure relates to a method to assay the stability of the ceramic product defined herein comprising the steps of immersing the ceramic product in water at room temperature for at least 24 hours, removing the ceramic product from water, drying the ceramic product at room temperature for at least 24 hours, cutting a portion of the ceramic product, placing the portion in a sample holder in a dilatometer, heating the portion in the dilatometer at a heating rate of at least 10 °C/minute and up to a firing temperature between 400 - 500 °C, and cooling the piece at room temperature.

### BRIEF DESCRIPTION OF THE FIGURES

The foregoing and other advantages and features will be more fully understood from the following figures, in which:
FIG. 1 is a dilatometric graph for a ceramic product obtained as in the method herein described except for the drying temperature, which is lower than 50 °C. The components of the ceramic product are 93% plastic clay, 5% calcium hydroxide and 2% sodium carbonate.
FIG. 2 is a dilatometric graph for a ceramic product obtained as in the method herein described except for the drying temperature, which is lower than 50 °C. The components of the ceramic product are 93% standard clay, 5% calcium hydroxide and 2% sodium carbonate.
FIG. 3 is a dilatometric graph for a ceramic product obtained as in the method herein described fired at 500 °C. The components of the ceramic product are 93% plastic clay, 5% calcium hydroxide and 2% sodium carbonate.

### DETAILED DESCRIPTION OF THE DISCLOSURE

The present disclosure therefore relates, in a first aspect, to a method for producing a ceramic product comprising the steps of mixing clay with an alkaline earth hydroxide to obtain a first mixture, milling the first mixture, adding a water dissolution of an alkaline carbonate to the mixture to obtain a second mixture, extruding the second mixture in a vacuum extruder to obtain an air-free extruded product, drying the air-free kneaded product to obtain a dried product until the residual moisture is between 4% and 6% by weight with respect to the total amount of the obtained dried product, and firing the dried product at a temperature between 400°C and 500°C.

The ceramic industry, as known in the art, uses clay as a basic raw material. Clay is formed typically by crystals of a size between 0.1 micron and 2 microns, with the he particularity that the broken edges of these crystals are charged with negative electric charges.

On the other hand, the water molecule is like a very small magnet (nano-magnet) with one of its poles positively charged and the other negatively charged.

This results in the clay having a high affinity for water and absorbs it even while fixing the water in the environment.

When to a dry and powdery mass of clay we add about 15-30% of water, it is strongly fixed by its positive pole, on the negative charges of the clay particles and the resulting mass becomes plastic, cohesive and mouldable, i.e., the most important property of clay is plasticity, which allows the manufacture of thin-walled hollow bricks by vacuum extrusion.

Therefore, the clay according to the present disclosure may preferably be plastic. The same clay can be used in the present disclosure as those used in traditional ceramic industry: illite, kaolinitic and montmorillonite clays, provided that the necessary degreasing agents are available to compensate for the excessive plasticity of the latter. This condition is the same as that required by the traditional ceramic industry, when the available clays are too plastic (montmorillonite), with the advantage that in the present disclosure a wider range of materials and wastes can be used: building rubble, foundry slag, crushed and ground limestone, defective fired pieces etc.

The elimination of air by means of vacuum improves the plasticity of the clay mass, since air is an insulator that weakens the clay/water bond.

Therefore, to manufacture hollow parts by extrusion clay and water are needed.

The method herein further discloses that the alkaline earth hydroxide is preferably calcium hydroxide and/or is in a powdered form, but other hydroxides may be used.

In the method herein disclosed, the alkaline earth hydroxide may be between 3% and 10% by weight with respect to the total amount of the first mixture.

Preferably, the alkaline carbonate may be sodium carbonate.

In the method as herein disclosed, the alkaline carbonate may be between 2% and 5% by weight with respect to the total amount of the first mixture.

The alkaline carbonate dissolved in water may be added to the first mixture using a peristaltic pump and a flow meter. The more intense the kneading, the better, and it can be used with any type of kneading machine currently used in the manufacture of extruded bricks.

Preferably, the water dissolution of the alkaline carbonate in water may have a concentration equal to or lower than 300 g/l at 25°C.

In the method as herein disclosed, the concentration of the alkaline carbonate may be between 2% to 5% by weight with respect to the total amount of the first mixture.

In the method as herein disclosed, the consistency of the second mixture is between 1.5 to 4 kg/cm².

Consistency, as known in the art, is the relative mobility or ability of a mixture to flow.

In the method as disclosed, the milling may be performed in a hammer mill, a pendular mill, a ball mill, a wet pan mill or rolling mills. The purpose of milling is to ensure that the components of the first mixture are homogeneously mixed and able to be dissolved when the water dissolution of an alkaline carbonate is added.

The first mixture in the method herein disclosed may further comprise additives, that may be selected from the group of Kieselguhr earth, foundry slag, ceramic waste, glass cullet, fly ash, recycled construction aggregates, ashes from wood combustion etc. The additives mentioned belonging to the "arid" category may be beneficial due to their pozzolanic properties and improvement of the technical features of the final product.

A wide variety of pieces can be manufactured according to the present method by changing the funnel and the nozzles or molds located at the outlet of the extruder, depending on the type of piece to be manufactured: hollow, peforated or solid.

Drying can be carried out in any of the different types of dryers used in the ceramic industry today, as long as the pieces are dried separately.

In the dryer, most of the molding humidity contained in the piece evaporates, mainly that which is interposed between particle and particle, which is responsible for the drying shrinkage.

The pieces should leave the dryer with a residual humidity between 4 % and 6 % (relative moisture), since excessive drying should be avoided, so that the pieces do not rehydrate during the time they remain exposed to the ambient humidity between leaving the dryer and entering the kiln.

When firing the product, only a firing temperature between 400 °C and 500 °C guarantee the total combination of the additives with the clay present in the product and a functional product having the desired properties of a building material.

The present disclosure, in a second aspect, also relates to a ceramic product obtained by the method as defined herein.

Therefore, according to the present disclosure, plastic clay is needed to obtain hollow parts by vacuum extrusion. Moreover, those parts need to be fired at temperatures below 600 °C to prevent the emission of CO₂ derived from lime decomposition, and to prevent the emission of HF (derived from fluorite, CaF₂, decomposition) and to minimize fuel consumption in the kiln.

To comply with the two above conditions, after extrusion, the clay must be inertized in such a way that, even if it is fired between 400 °C to 500 °C, the clay has already lost the capacity to absorb environmental humidity and to expand; otherwise, the reabsorption of humidity would result in the disintegration of the ceramic material.

The ceramic material obtained according to the method herein disclosed need to be stable and able to be submerged in water and remain unaltered for an undefined period of time without losing its properties of mechanical resistance, etc.

If in the fired pieces, at the exit of the kiln, there are free clay without reacting with the additives and, as the days go by, free clay absorbs humidity from the air losing the piece its metallic sound and its resistance thereby becoming unusable.

The differences in humidity and expansion between the surface layer of the piece and the interior of the walls and partitions of the same, generate great tensile stresses, much higher than the tensile strength of the pieces obtained.

If in the fired pieces, at the exit of the kiln, there is clay without reacting with the additives and, as the days go by, these lose the metallic sound and the resistance they had, becoming unusable.

The existing free clay in these pieces has absorbed environmental humidity superficially and has dilated. The difference of dilatation between the rehydrated superficial layer and the deep layers not rehydrated, has generated strong tensions that have given place to the cracking of the deep layers, losing the piece, its resistance and characteristic sound.

The problem described above has led to the development of a control method to detect pieces that are not suitable for its intended use and to know if a piece has been stabilized or not by means of the additives and the firing process used.

This method, in a third aspect, relates to a method to assay the stability of the ceramic product described herein comprising the following steps: immersing the ceramic product in water at room temperature for at least 24 hours, removing the ceramic product from water, drying the ceramic product at room temperature for at least 24 hours, cutting a portion of the ceramic product, placing the portion in a sample holder in a dilatometer, heating the portion in the dilatometer at a heating rate of at least 10 °C/minute and up to a firing temperature of 400 °C - 500°C, and cooling the portion at room temperature.

The immersion time in the above method may be preferably about 24 hours, the drying time about 24 hours and/or the heating rate about 10 °C/minute.

The drying of the ceramic product at room temperature may be performed with the help of a fan.

The portion of the ceramic product for dilatometric test, may preferably be a cylindrical rod of about 20 mm in length and about 5 mm in diameter.

It will also be understood that any range of values given may not be optimal in extreme values and may require adaptations of the invention to these extreme values are applicable, such adaptations being within reach of a skilled person.

The combination of the two components used calcium hydroxide (Ca(OH)₂) and sodium carbonate (Na₂CO₃), plus the accelerating action of the firing temperature used 400 °C - 500 °C, make it possible to obtain a ceramic product of equal or greater strength than traditional fired products.

This product also performs well in successive freezing and thawing cycles and is environmentally friendly, as it avoids CO₂ emissions into the atmosphere since it's fired well below the decomposition temperature of calcium carbonate.

Moreover, by reducing the firing temperature from 950 °C - 1050 °C to 400 °C - 500 °C, fuel consumption is reduced to much less than half that used by the traditional ceramic industry.

The disclosed method is also environmentally friendly, because firing at a temperature as low as 400°C - 500 °C, is below the decomposition of fluorides existing in the clays and therefore the emission of hydrofluoric acid in the atmosphere is prevented.

### EXAMPLES

A first sample of a ceramic product was prepared as described in the method herein comprising 93% of plastic clay, 5% of calcium hydroxide and 2% of sodium carbonate, dried at room temperature but not fired.

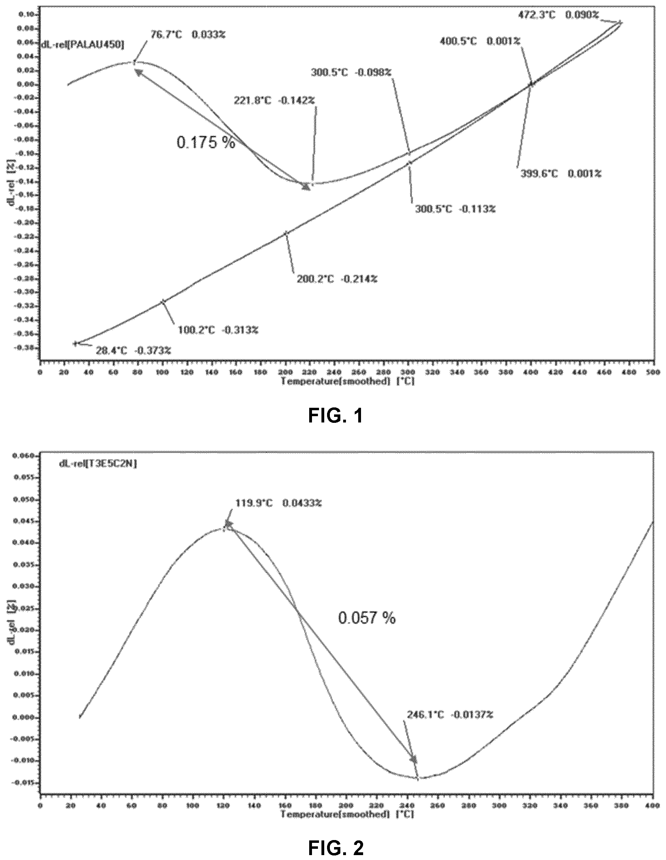

The dilatometric curve for this sample presents a shrinkage due to loss of ambient humidity between 76.7 °C and 221.8 °C of 0.175 % (see FIG. 1).

This shrinkage is equal, but of different sign, to the maximum expansion that this piece containing unreacted clay experienced by saturation of humidity at room temperature.

In the same conditions as for the first sample, a piece manufactured with a clay of normal plasticity and 5% of calcium hydroxide and 2% sodium carbonate presents a shrinkage between 119 °C and 246.1 °C of 0,057% (see FIG. 2).

Therefore, the expansion by reabsorption of ambient humidity in the clay of normal plasticity is reduced by 60.42 %; with which the tensions caused in the piece by differences of reabsorption of ambient humidity between surface and interior of the walls of the piece are reduced in the same proportion, in spite of which, the pieces obtained with the mixture, corresponding to FIG. 2, also crack in contact with ambient humidity; but to a lesser extent than those obtained with the mixture of FIG. 1.

If the mixture corresponding to FIG. 1, that is, the most plastic, is heated after drying, at 200 °C, 300 °C, 400 °C, it is observed that the dilatation by reabsorption of ambient humidity is progressively reduced, since the temperature accelerates the reaction of the additives used with the clay.

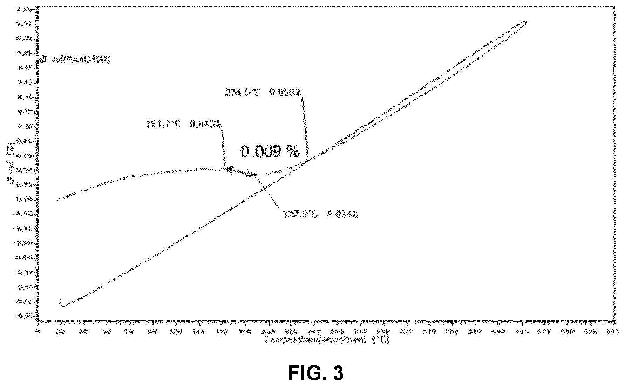

At 400 °C, the amount of clay left in the piece is very little and the dilatation produced by the reabsorption of ambient humidity is only 0.009 % (see FIG. 3).

A 0.009 % of dilatation by reabsorption of ambient humidity is insignificant; being absorbed by the elastic deformation capacity of the piece.

The treated pieces fired between 400 °C and 500 °C do not break, even if they are immersed in water immediately after leaving the oven.

Therefore, the combination of the two components used calcium hydroxide (Ca(OH)₂) and sodium carbonate (Na₂CO₃), plus the accelerating action of the firing temperature used 400 - 500 °C, make it possible to obtain a ceramic product of equal or greater strength than traditional fired products.

This product also performs well in successive freezing and thawing cycles and is environmentally friendly, as it avoids CO₂ and HF emissions onto the atmosphere since it is fired well below the decomposition temperature of calcium carbonate and fluorite.

Moreover, by reducing the firing temperature from 950 °C to 1050 °C to 400 °C to 500 °C, fuel consumption is reduced to much less than half that used by the traditional ceramic industry.

## Claims

1. A method for producing a ceramic product comprising the steps of:
- mixing clay with an alkaline earth hydroxide to obtain a first mixture,
- milling the first mixture,
- adding a water dissolution of an alkaline carbonate to the mixture to obtain a second mixture,
- extruding the second mixture in a vacuum extruder to obtain an air-free extruded product,
- drying the air-free extruded product to obtain a dried product until the residual moisture is between 4% and 6% by weight with respect to the total amount of the obtained dried product, and
- firing the dried product at a temperature between 400 °C and 500 °C.

2. The method according to claim 1, wherein the alkaline earth hydroxide is calcium hydroxide and/or is in a powdered form.

3. The method according to any one of the previous claims, wherein the alkaline earth hydroxide is between 3% and 10% by weight with respect to the total amount of the first mixture.

4. The method according to any one of the previous claims, wherein the alkaline carbonate is sodium carbonate.

5. The method according to any one of the previous claims, wherein the alkaline carbonate is between 2% and 5% by weight with respect to the total amount of the first mixture.

6. The method according to any one of the previous claims, wherein the dissolution of the alkaline carbonate in water has a concentration equal to or lower than 300 g/l at 25°C.

7. The method according to any one of the previous claims, wherein the concentration of the alkaline carbonate is between 2% to 5% by weight with respect to the total amount of the first mixture.

8. The method according to any one of the previous claims, wherein the consistency of the second mixture is between 1.5 to 4 kg/cm².

9. The method according to any one of the previous claims, wherein the milling is performed in a hammer mill, a pendular mill, a ball mill, a wet pan mill or rolling mills.

10. The method according to any one of the previous claims wherein the first mixture further comprises additives being selected from the group of Kieselguhr earth, foundry slag, ceramic waste, glass cullet, fly ash, recycled construction aggregates, other biomasses of plant origin and/or combinations thereof.

11. The ceramic product obtained by the method as defined in any one of claims 1 to 10.

12. A method to assay the stability of the ceramic product defined in claim 11 comprising the following steps:
- immersing the ceramic product in water at room temperature for at least 24 hours,
- removing the ceramic product from water,
- drying the ceramic product at room temperature for at least 24 hours,
- cutting a portion of the ceramic product,
- placing the portion in a sample holder in a dilatometer,
- heating the portion in the dilatometer at a heating rate of at least 10 °C/minute and up to a firing temperature of 500 °C, and
- cooling the portion at room temperature.

13. The method according to claim 12, wherein the immersion time is about 24 hours, the drying time is about 24 hours and/or the heating rate is about 10 °C/minute.

14. The method according to any one of claims 12 or 13, wherein the drying of the ceramic product is performed with a fan.

15. The method according to any one of claims 12 to 14, wherein the portion of the ceramic product is a cylindrical rod of about 20 mm in length and about 5 mm in diameter.
